# DEMANDE DE BREVET EUROPEEN

(11) **EP 0 922 932 A1**
(43) Date de publication de la demande: **16.06.1999**
(21) Numéro de dépôt: 97440129.1
(22) Date de dépôt: 09.12.1997
(51) Int. Cl.: G01C 15/00

(54) **Dispositif de niveau.**

(71) Demandeur: Long Distance (S.à.r.l.), 67117 Quatzenheim (FR)
(72) Inventeur: Lechartier, Michel, 67117 Quatzenheim (FR)
(74) Mandataire: Rhein, Alain

(57) **Abrégé**

L'invention a trait à un dispositif de niveau du type comportant un corps rectiligne (1) présentant une face d' appui plane (3), et incorporant un moyen de mesure de l'horizontalité ainsi qu'un émetteur d'un rayon lumineux (6) parallèle à ladite face d'appui plane (3).

Ce dispositif est caractérisé en ce qu'il présente au moins deux articulations (40, 41) permettant audit corps (1) d'être écarté angulairement de ladite face d'appui plane (3), de manière que ledit rayon lumineux (6) puisse décrire un angle au-dessus et en dessous de l'horizontal.

## Description

La présente invention a pour objet un dispositif de niveau.

Un dispositif de niveau est principalement destiné à vérifier ou à donner l'horizontalité d'une surface, il trouve son utilité essentiellement dans le domaine de la construction.

Il existe différents dispositifs de niveau, le plus courant est le niveau à bulle, comprenant dans un châssis rectiligne muni d'une fiole transparente remplie partiellement d'un liquide, généralement de l'alcool, et marquée, dans sa région médiane, de deux repères entre lesquels se positionne la bulle d'air lorsque ledit châssis est à l' horizontale, tandis qu'une excentration de ladite bulle d'air par rapport auxdits repères traduit une certaine inclinaison.

Ce type de niveau présente l' avantage d'être peu coûteux. Par contre il n'est pas d'une grande précision et ne permet pas, même approximativement, de mesureur un angle.

De plus, afin de vérifier l'horizontalité d'un plan, il est nécessaire de procéder à deux mesures selon des lignes concourantes.

D'autre part, les niveaux à bulle ne permettent pas de mesurer une horizontalité sur une grande longueur, il est alors nécessaire d'utiliser, soit une règle de maçon sur laquelle est posé le niveau à bulle, soit un niveau à bulle de très grande longueur, toutefois ce type de niveau est très encombrant et inutilisable pour d'autres types de mesure.

Pour pallier chacun de ces inconvénients il a été proposé d'autres dispositifs de niveau.

Ainsi, dans le document FR 2.730.560, il est décrit un dispositif de niveau qui comprend un boîtier incorporant un disque d' inertie susceptible de conserver la même orientation dans l'espace quelle que soit l'inclinaison dudit boîtier, et présentant un repère par rapport auquel peut être mesuré, sur une graduation portée sur ledit boîtier, l'angle que fait le plan sur lequel est posé ce dernier.

Le document DE-3.024.734 propose un dispositif similaire, où une sphère, apte à conserver la même orientation dans l'espace, est enferée dans une sphère graduée, elle-même placée dans un boîtier.

Avantsgeusement par rapport au dispositif précédent comportant un disque, celui décrit dans ce document EP-30 24 734 permet, en une seule mesure, de vérifier l'horizontalité d'un plan.

Toutefois ces dispositifs ne permettent pas de vérifier une horizontalité sur une grande longueur, ni de reporter un angle.

Il a également été proposé dans les documents WO-9220998 et EP-0 401 815 des dispositifs de niveau à bulle susceptibles d'émettre un rayon lusineux, tel qu'un faisceau laser, parallèlement à la face d'appui de référence du niveau.

Si ces dispositifs permettent de vérifier l' horizontalité sur une grande longueur, ils ne permettent pas de mesurer précisément un angle et de reporter celui-ci.

Dans le document EP-0 161 209, il est proposé un dispositif de niveau comportant, outre un disque d' inertie, une semelle articulée par l'une de ses extrémités, forment une équerre d' angle variable, autorisant ainsi le report d' un angle et la projection de celui-ci, en association toutefois avec un autre outil, tel qu'une règle métallique par exemple.

Il serait cependant possible d' équiper ce dispositif de niveau d'un dispositif d'émission d'un rayon lumineux du type faisceau laser, tel que ceux proposés dans les documents WO-9220998 et EP-0 401 815, mais cela nécessiterait, afin de permettre de mesurer et de reporter une inclinaison au-dessous de l'horizontale ou au-dessus de l'horizontale, d'équiper ledit dispositif de deux émetteurs de faisceau laser, un de chaque côté, avec pour inconvénient un coût de fabrication trop important.

La présente invention a pour but de remédier à tous les inconvénients précités, en proposant un dispositif de niveau permettant de mesurer une inclinaison de manière précise, que ce soit sur une petite ou une très grande longueur, et de reporter ladite inclinaison, que ce soit au-dessus ou en dessous de l'horizontale.

Le dispositif de niveau objet de la présente invention comporte un corps rectiligne présentant une face d'appui plane, et incorporant un moyen de mesure de l' horizontalité ainsi qu'un émetteur d'un rayon lumineux parallèle à ladite face d'appui plane, et il se caractérise essentiellement en ce qu'il présente au fins deux articulations permettant audit corps d'être écarté angulairement de ladite face d'appui plane, de manière que ledit rayon lumineux puisse décrire un angle audessus et en dessous de l'horizontale.

Selon un mode de réalisation particulier du dispositif selon l'invention, la surface d'appui consiste en une barre articulée par l'une de ses extrémités à l'extrémité d'une autre barre elle-même articulée par son autre extrémite au corps qui incorpore le moyen de mesure de l' horizontalité et l' émetteur d'un rayon lumineux.

Selon une caractéristique additionnelle du dispositif selon l'invention, le moyen de mesure de l'horizontalité consiste en une sphère graduée, susceptible de conserver une orientation stable dans l'espace, plongée dans un liquide contenu dans une autre sphère transparente qui porte des graduations.

Selon une autre caractéristique additionnelle du dispositif selon l'invention, le liquide est fluorescent, tandis qu'une source de lumière illumine la sphère extérieure.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
- la figure 1 représente une vue en élévation d'un dispositif de niveau selon l'invention.
- les figures 2a et 2b représentent des vues en élévation du même dispositif dans des configurations différentes d'utilisation.

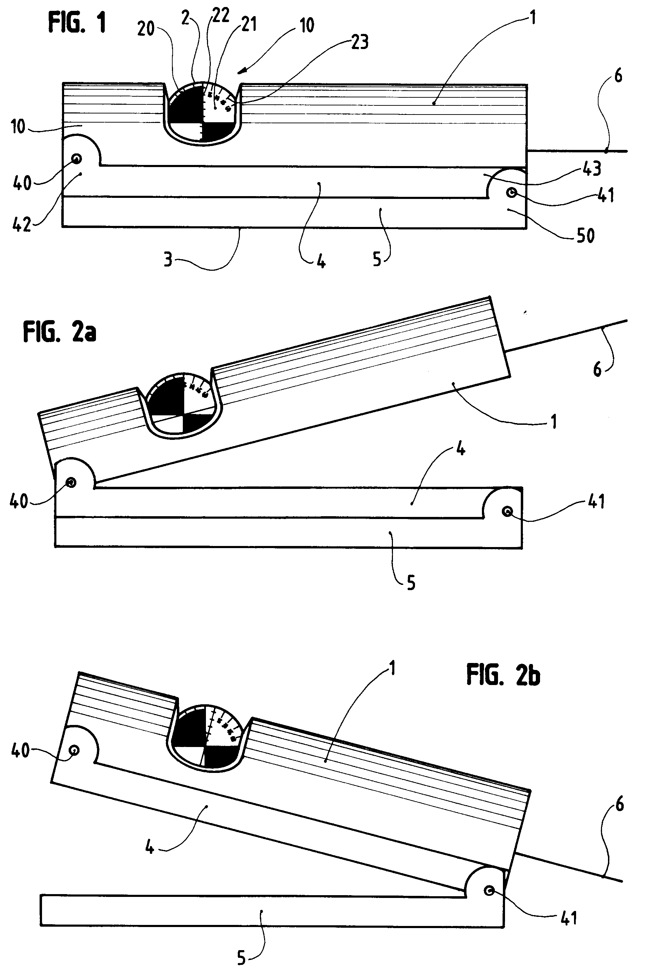

Si on se réfère à la figure 1, on peut voir qu'un dispositif de niveau selon l'invention comporte un corps 1 présentant une ouverture 10 où est logée une sphère transparente 2 renfermant un liquide 20, dans lequel baigne une sphère 21 susceptible, de manière connue en soi, de conserver la même orientation dans l'espace.

Les sphères 2 et 21 comportent chacune des graduations, respectivement 22 et 23, permettant de mesurer l' inclinaison du plan sur lequel est posé le corps 1 par une face d'appui 3.

On notera qu'un matériau fluorescent, du type fluorescéine par exemple, est dissout dans le liquide 20, et que le corps 1 renferme une source lumineuse, non visible, apte à éclairer la sphère 2, en sorte que des mesures peuvent être réalisées même dans la pénombre.

La surface d'appui 3 est constituée de deux barres 4 et 5 articulées l'une à l'autre. Le barre 4, qui est intercalée entre le corps 1 et la barre 5, comporte deux pivots 40 et 41 d' axes transversaux parallèles, un à chacune de ses extrémités, respectivement 42 et 43, le corps 1 s'articulant par son extrémité 10 sur le pivot 40, tandis que la barre 5 s'articule par une extrémité 50 sur le pivot 41.

Le corps 1 renferme également un émetteur, non visible, d'une lumière cohérente visible du type faisceau laser, le rayon lumineux 6 qui en est issu étant d' axe parallèle à la face d' appui 3 lorsque les barres 4 et 5 sont repliées sur le corps 1.

Le rayon lumineux 6 permet, de manière connue en soi, de mesurer une inclinaison sur une grande distance, d' utiliser le dispositif de niveau comme un fil à plomb, et de matérialiser l' angle d'une inclinaison à reproduire.

Ainsi, si on se réfère maintenant à la figure 2a, on peut voir qu'en faisant pivoter le corps 1 uniquement autour du pivot 40, les barres 4 et 5 demeurant accolées, le rayon lumineux 6 permet de reporter à distance une inclinaison au-dessus de l'horizontale.

De même, sur la figure 2b, on peut voir qu'en faisant pivoter la barre 4 autour du pivot 41, le corps 1 et la barre 4 restant accolés, le rayon lumineux 6 permet de reporter à distance une inclinaison en dessous de l'horizontale.

On notera que les opérations de mesure précédemment décrites peuvent être réalisées sans qu'il soit forcément nécessaire que deux des parties articulées soient accolées l'une à l'autre, l' inclinaison étant mesurée au niveau du corps 1 par rapport à la barre 5 qui repose sur le plan de référence.

Il va de soi que la présente invention ne saurait être limitée à la description qui précède d'un de ses modes de réalisation, susceptible de subir quelques modifications sans pour autant sortir du cadre de l'invention.

## Revendications

1. Dispositif de niveau du type comportant un corps rectiligne (1) présentant une face d'appui plane (3), et incorporant un moyen de mesure de l'horizontalité ainsi qu'un émetteur d'un rayon lumineux (6) parallèle à ladite face d'appui plane (3), caractérisé en ce qu'il présente au moins deux articulations (40, 41) permettant audit corps (1) d'être écarté angulairement de ladite face d'appui plane (3), de manière que ledit rayon lumineux (6) puisse décrire un angle au-dessus et en dessous de l'horizontal.

2. Dispositif selon la revendication 1, caractérisé en ce que la surface d'appui (3) consiste en une barre (5) articulée par l'une de ses extrémités (50) à l'extrémité (43) d'une autre barre (4), elle-même articulée par son autre extrémité (42) au corps (1) qui incorpore le moyen de mesure de l' horizontalité et l'émetteur d'un rayon lumineux.

3. Dispositif selon la revendication 1 et la revendication 2, caractérisé en ce que le moyen de mesure de l' horizontalité consiste en une sphère graduée (21), susceptible de conserver une orientation stable dans l'espace, plongée dans un liquide (20) contenu dans une autre sphère transparente (2) qui porte des graduations (22).

4. Dispositif selon la revendication 3, caractérisé en ce que le liquide (20) est fluorescent, tandis qu'une source de lumière illumine la sphère extérieure (2).

5. Dispositif selon l'une quelconque des revendications précédentes caractérisé en ce que l' émetteur du rayon lumineux (6) est un émetteur laser.
